# EUROPEAN PATENT SPECIFICATION

(11) **EP 4 416 419 B1**
(45) Date of publication and mention of the grant of the patent: **24.12.2025**
(21) Application number: 22789711.3
(22) Date of filing: 12.10.2022
(51) Int. Cl.: F16L 59/02

(54) **DEVICE FOR ACOUSTIC AND/OR THERMAL INSULATION OF A TUBULAR PIPE AND METHOD FOR REMOVING AND REMOUNTING SUCH A DEVICE**
VORRICHTUNG ZUR AKUSTISCHEN UND/ODER THERMISCHEN ISOLIERUNG EINES ROHRFÖRMIGEN ROHRES UND VERFAHREN ZUM ENTFERNEN UND WIEDERMONTIEREN EINER SOLCHEN VORRICHTUNG
DISPOSITIF D'ISOLATION ACOUSTIQUE ET/OU THERMIQUE D'UN TUYAU TUBULAIRE ET PROCÉDÉ DE DÉMONTAGE ET DE REMONTAGE D'UN TEL DISPOSITIF

(30) Priority: 12.10.2021 NL 2029382
(43) Date of publication of application: 21.08.2024
(73) Proprietor: Klaver, Gijsbert, 1721 DX Broek op Langedijk (NL)
(72) Inventor: Klaver, Gijsbert, 1721 DX Broek op Langedijk (NL)
(74) Representative: Dogio Patents B.V.
(86) International application number: PCT/NL2022/050582
(87) International publication number: WO 2023/063822

(56) References cited:
- WO-A2-2004/023027
- US-A- 4 605 043
- US-A1- 2003 234 058
- US-A1- 2014 305 534

## Description

The present invention relates to a device for acoustic and/or thermal insulation of a tubular pipe having an external pipe circumference, said device comprising:
- a first rectangular sheet made of a flexible foam material having a first density, wherein said first rectangular sheet has a first length in a longitudinal direction and a first width in a lateral direction, wherein the first width is substantially equal to the external pipe circumference of a tubular pipe for which the device is designed to be mounted on, and wherein said first sheet has a first lateral edge and an opposite second lateral edge;
- a second rectangular sheet made of a flexible solid material having a second density, wherein the second density is higher than the first density, wherein said second rectangular sheet has a second length in said longitudinal direction and a second width in said lateral direction, wherein the second length is substantially equal to the first length, and wherein said second sheet has a first lateral edge and an opposite second lateral edge; and
- wherein the first sheet and the second sheet are connected to each other;
- wherein the second width is larger than the first width; and
- wherein a strip shaped section adjacent the second lateral edge of the second sheet, extending on a side of said second sheet which is facing towards the first sheet and/or a strip shaped section adjacent the first lateral edge of the second sheet, extending on a side of said second sheet which is facing away from the first sheet, is provided with an adhesive, for connecting the second lateral edge of the second sheet to the first lateral edge of the second sheet when the device is mounted on the pipe.

Such a device is disclosed in US-A-4605043.

Insulation of pipes may reduce airborne sound that is transmitted from the pipe through the air. In pipes the sound is due to the flow of fluid in the pipe and it is propagated into the room surrounding the pipe. The invention may also be embodied in a device which is used for thermal insulation of a pipe, for instance a hot fluid pipe.

The goal of the current invention is to provide a device for insulation of a pipe which is easy to mount, and which allows for easy re-use of the device, such that material waste can be prevented.

To this end, the device according to the preamble is characterized in that the first lateral edge of the first sheet and the first lateral edge of the second sheet are connected to each other, while the central parts and second lateral edge of the first sheet and the central parts and second lateral edge of the second sheet are not connected to each other.

The device may thus be easily mounted on a pipe, and subsequently be removed and reused, and in the mounted state the lateral edges of the first sheet extend tightly against each other and against the outer circumference of the second pipe. The term "strip shaped" in this respect may be interpreted as a shape of which the length is larger than the width.

According to a preferred embodiment, the foam material is a polyurethane foam, a polyethylene foam, a polychloroprene foam, a nitrile butadiene rubber foam or a ethylene propylene diene monomer foam.

According to a preferred embodiment, the second sheet forms a barrier layer for acoustic insulation.

According to an especially preferred embodiment, the solid material comprises at least one of poly vinyl chloride rubber, ethylene propylene diene monomer rubber and ethylene vinyl acetate rubber, preferably the solid material is a blend of ethylene propylene diene monomer and ethylene vinyl acetate rubber.

According to a preferred embodiment, the adhesive is a double sided adhesive strip.

According to a preferred embodiment, the thickness of the first sheet is between 5 and 25 mm, preferably between 7 and 15 mm.

According to a preferred embodiment, the thickness of the second sheet is between 1 and 5 mm, preferably between 1.5 and 3 mm.

According to a preferred embodiment, the first lateral edge of the first sheet and the first lateral edge of the second sheet are connected to each other by means of glue, which connects a strip shaped section adjacent the first lateral edge of the second sheet, extending on a side of said second sheet which is facing towards the first sheet and a strip shaped section adjacent the first lateral edge of the first sheet, extending on a side of said first sheet which is facing towards the second sheet.

Because only the lateral strips at one side of the first and second sheets are mutually connected the surfaces of the first and second sheets are allowed to move relative to each other in the tangential direction when mounting the device, for accommodating the difference in diameters of the central planes of the first and second sheets in the mounted state.

The present invention also relates to a method for mounting the device, wherein the device is mounted on the pipe by wrapping the device around the second pipe and pushing the strip shaped section of the second lateral edge of the second sheet onto the strip shaped section of the first lateral edge, thereby connecting the second lateral edge of the second sheet to the first lateral edge of the second sheet by means of said adhesive,
such that the first lateral edge of the first sheet and the second lateral edge of the first sheet extend tightly against each other and against the outer circumference of the second pipe.

Finally, the present invention relates to a method for removing and remounting the device, wherein said device is mounted on a first pipe;
wherein the first width of the first sheet is substantially equal to the external pipe circumference of the first tubular pipe;
such that the first lateral edge of the first sheet and the second lateral edge of the first sheet extend tightly against each other and against the outer circumference of the first pipe;, said method comprises removing the device from the first pipe by pulling the strip shaped section of the second lateral edge of the second sheet from the strip shaped section of the first lateral edge, whereby the adhesive remains on the strip shaped section adjacent the second lateral edge of the second sheet, extending on the side of said second sheet which is facing towards the first sheet and/or the strip shaped section adjacent the first lateral edge of the second sheet, extending on the side of said second sheet which is facing away from the first sheet; and
mounting the device on a second tubular pipe, having substantially the same diameter as the first pipe, by wrapping the device around the second pipe and pushing the strip shaped section of the second lateral edge of the second sheet onto the strip shaped section of the first lateral edge, thereby connecting the second lateral edge of the second sheet to the first lateral edge of the second sheet by means of said adhesive;
such that the first lateral edge of the first sheet and the second lateral edge of the first sheet extend tightly against each other and against the outer circumference of the second pipe.

The present invention will now be illustrated with reference to the drawing where
Fig. 1a shows a front view of a device according to the invention in an unmounted state;
Fig. 1b shows a cross-section of the device of Fig. 1a in an unmounted state; and
Fig. 2 shows a cross section of the device of Fig. 1a and Fig. 1b when mounted on a pipe.

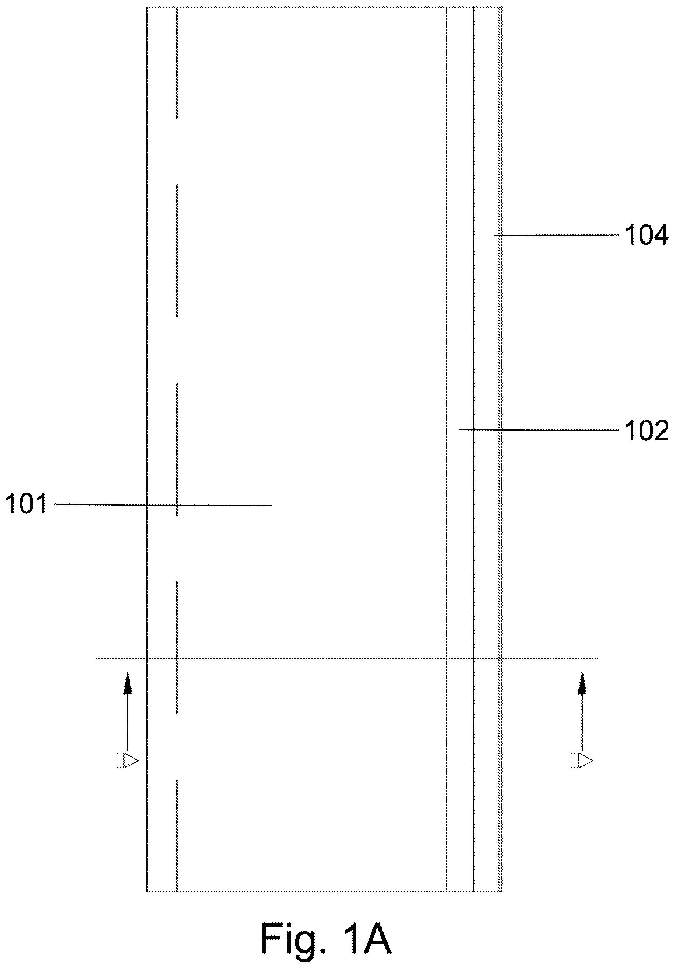

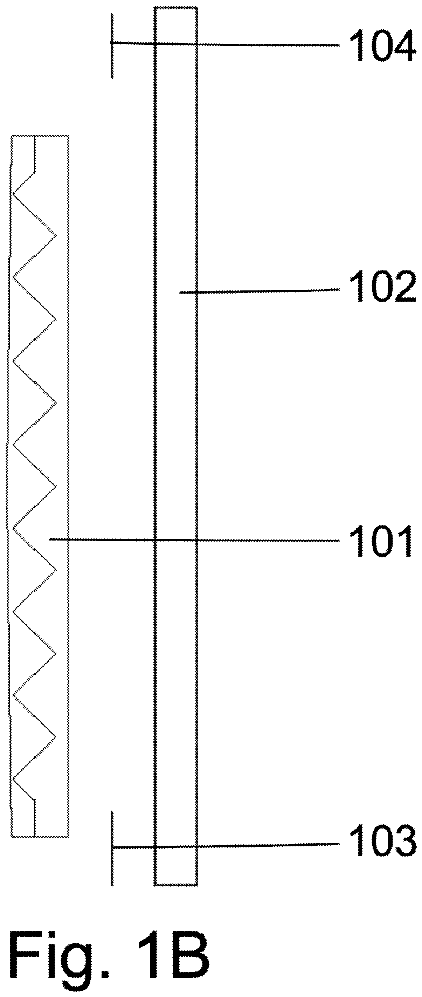

According to Figs. 1a and 1b a device for acoustic and/or thermal insulation of a tubular pipe 5 having an external pipe circumference comprises a first rectangular sheet 101 and a second rectangular sheet 102.

The first sheet 101 has a thickness of for instance 10 mm and is made of for instance polyurethane foam.

The second sheet 102 is a barrier layer which has a thickness of for instance 2 mm and which is made of for instance a blend of ethylene propylene diene monomer (EPDM) and ethylene vinyl acetate (EVA) rubber.

At one lateral edge the first sheet 101 and the second sheet 102 are connected to each other by means of glue strip 103. At the opposite lateral edges the first sheet 101 and the second sheet 102 are not connected to each other, and also the central parts of the first sheet 101 and the second sheet 102 are not connected to each other.

Said opposite lateral edge of the second sheet 102 extends beyond the opposite edge of the first sheet 101, and the second sheet 102 is provided with a double-sided self-adhesive strip 104 along said edge, at the side of the second sheet 102 which faces the first sheet 101. Before mounting the device on the pipe 105 the unused side of the self-adhesive strip 104 may be covered by a protective waxed paper layer (not shown).

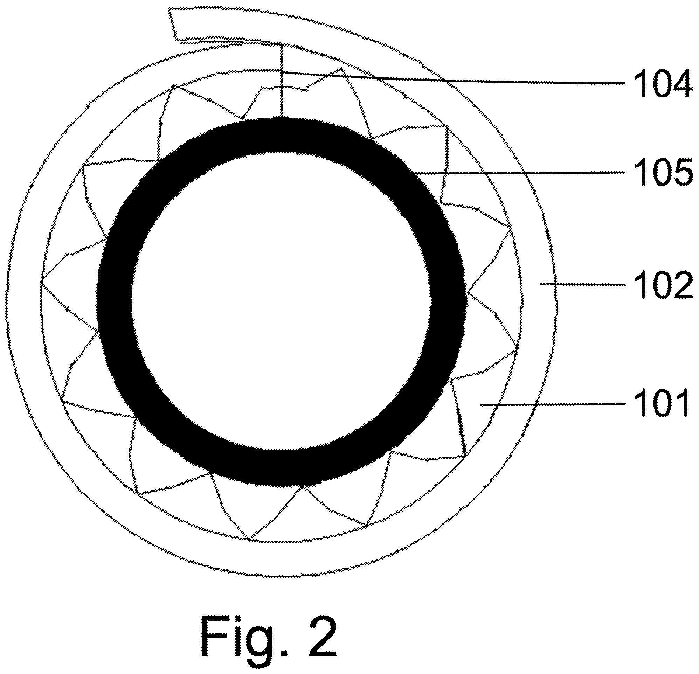

As shown in Fig. 2, when the device is mounted on the pipe 105, the first sheet 101 is wrapped around the pipe 105 with the surface of the first sheet 101 against the surface of the pipe 105 such that there is no gap between the lateral edges of the first sheet 101. The second sheet 102 is wrapped around the first sheet 101, the paper protective layer is removed from the self-adhesive strip 104, and the strip shaped area at the edge of the second sheet 102 having the self-adhesive strip 4 is pushed against the strip shaped area at the other edge of the second sheet 102, thereby forming a releasable connection, thereby allowing easy removal and re-use of the device.

The invention has thus been described by means of a preferred embodiment. It is to be understood, however, that this disclosure is merely illustrative. The invention is defined by the appended claims.

## Claims

1. A device for acoustic and/or thermal insulation of a tubular pipe (105) having an external pipe (105) circumference, said device comprising:
- a first rectangular sheet (101) made of a flexible foam material having a first density, wherein said first rectangular sheet (101) has a first length in a longitudinal direction and a first width in a lateral direction, wherein the first width is substantially equal to the external pipe (105) circumference of a tubular pipe (105) for which the device is designed to be mounted on, and wherein said first sheet (101) has a first lateral edge and an opposite second lateral edge;
- a second rectangular sheet (102) made of a flexible solid material having a second density, wherein the second density is higher than the first density, wherein said second rectangular sheet (102) has a second length in said longitudinal direction and a second width in said lateral direction, wherein the second length is substantially equal to the first length, and wherein said second sheet (102) has a first lateral edge and an opposite second lateral edge; and
- wherein the first sheet (101) and the second sheet (102) are connected to each other;
- wherein the second width is larger than the first width; and
- wherein a strip shaped section adjacent the second lateral edge of the second sheet (102), extending on a side of said second sheet (102) which is facing towards the first sheet (101) and/or a strip shaped section adjacent the first lateral edge of the second sheet (102), extending on a side of said second sheet (102) which is facing away from the first sheet (101), is provided with an adhesive, for connecting the second lateral edge of the second sheet (102) to the first lateral edge of the second sheet (102) when the device is mounted on the pipe (105),
**characterized in that** the first lateral edge of the first sheet (101) and the first lateral edge of the second sheet (102) are connected to each other, while the central parts and second lateral edge of the first sheet (101) and the central parts and second lateral edge of the second sheet (102) are not connected to each other.

2. The device according to claim 1, wherein the foam material is a polyurethane foam, a polyethylene foam, a polychloroprene foam, a nitrile butadiene rubber foam or an ethylene propylene diene monomer foam.

3. The device according to claim 1 or 2, wherein the second sheet (102) forms a barrier layer for acoustic insulation.

4. The device according to any of the preceding claims, wherein the solid material comprises at least one of poly vinyl chloride rubber, ethylene propylene diene monomer rubber and ethylene vinyl acetate rubber, preferably the solid material is a blend of ethylene propylene diene monomer and ethylene vinyl acetate rubber.

5. The device according to any of the preceding claims, wherein the adhesive is a double sided adhesive strip.

6. The device according to any of the preceding claims, wherein the thickness of the first sheet (101) is between 5 and 25 mm, preferably between 7 and 15 mm.

7. The device according to any of the preceding claims, wherein the thickness of the second sheet (102) is between 1 and 5 mm, preferably between 1.5 and 3 mm.

8. The device according to any of the preceding claims, wherein the first lateral edge of the first sheet (101) and the first lateral edge of the second sheet (102) are connected to each other by means of glue, which connects a strip shaped section adjacent the first lateral edge of the second sheet (102), extending on a side of said second sheet (102) which is facing towards the first sheet (101) and a strip shaped section adjacent the first lateral edge of the first sheet (101), extending on a side of said first sheet (101) which is facing towards the second sheet (102).

9. A method for mounting the device in accordance with any of the previous claims, wherein the device is mounted on the pipe (105) by wrapping the device around the second pipe (105) and pushing the strip shaped section of the second lateral edge of the second sheet (102) onto the strip shaped section of the first lateral edge, thereby connecting the second lateral edge of the second sheet (102) to the first lateral edge of the second sheet (102) by means of said adhesive, such that the first lateral edge of the first sheet (101) and the second lateral edge of the first sheet (101) extend tightly against each other and against the outer circumference of the second pipe (105).

10. A method for removing and remounting the device in accordance with any of claims 1 to 8,
wherein said device is mounted on a first pipe (105);
wherein the first width of the first sheet (101) is substantially equal to the external pipe (105) circumference of the first tubular pipe (105);
such that the first lateral edge of the first sheet (101) and the second lateral edge of the first sheet (101) extend tightly against each other and against the outer circumference of the first pipe (105); wherein said method comprises removing the device from the first pipe (105) by pulling the strip shaped section of the second lateral edge of the second sheet (102) from the strip shaped section of the first lateral edge, whereby the adhesive remains on the strip shaped section adjacent the second lateral edge of the second sheet (102), extending on the side of said second sheet (102) which is facing towards the first sheet (101) and/or the strip shaped section adjacent the first lateral edge of the second sheet (102), extending on the side of said second sheet (102) which is facing away from the first sheet (101); and
mounting the device on a second tubular pipe (105), having substantially the same diameter as the first pipe (105), by wrapping the device around the second pipe (105) and pushing the strip shaped section of the second lateral edge of the second sheet (102) onto the strip shaped section of the first lateral edge, thereby connecting the second lateral edge of the second sheet (102) to the first lateral edge of the second sheet (102) by means of said adhesive;
such that the first lateral edge of the first sheet (101) and the second lateral edge of the first sheet (101) extend tightly against each other and against the outer circumference of the second pipe (105).

## Patentansprüche

1. Vorrichtung zum akustischen und/oder thermischen Isolieren eines röhrenförmigen Rohrs (105) mit einem Außenrohrumfang (105), die Vorrichtung umfassend:
- eine erste rechteckige Folie (101) aus einem flexiblen Schaumstoffmaterial mit einer ersten Dichte, wobei die erste rechteckige Folie (101) eine erste Länge in einer Längsrichtung und eine erste Breite in einer lateralen Richtung aufweist, wobei die erste Breite im Wesentlichen gleich dem Außenrohrumfang (105) eines röhrenförmigen Rohrs (105) ist, auf dem die Vorrichtung montiert werden soll, und wobei die erste Folie (101) eine erste laterale Kante und eine dieser gegenüberliegende zweite laterale Kante aufweist;
- eine zweite rechteckige Folie (102), aus einem flexiblen festen Material mit einer zweiten Dichte, wobei die zweite Dichte höher ist als die erste Dichte, wobei die zweite rechteckige Folie (102) eine zweite Länge in der Längsrichtung und eine zweite Breite in der lateralen Richtung aufweist, wobei die zweite Länge im Wesentlichen gleich der ersten Länge ist und wobei die zweite Folie (102) eine erste laterale Kante und eine dieser gegenüberliegende zweite laterale Kante aufweist; und
- wobei die erste Folie (101) und die zweite Folie (102) miteinander verbunden sind;
- wobei die zweite Breite größer ist als die erste Breite; und
- wobei ein streifenförmiger Abschnitt, angrenzend an die zweite laterale Kante der zweiten Folie (102), der sich auf einer Seite der zweiten Folie (102) erstreckt, die der ersten Folie (101) zugewandt ist, und/oder ein streifenförmiger Abschnitt, angrenzend an die erste laterale Kante der zweiten Folie (102), der sich auf einer Seite der zweiten Folie (102) erstreckt, die der ersten Folie (101) abgewandt ist, mit einem Klebstoff versehen ist, um die zweite laterale Kante der zweiten Folie (102) mit der ersten lateralen Kante der zweiten Folie (102) zu verbinden, wenn die Vorrichtung an dem Rohr (105) montiert ist,
**dadurch gekennzeichnet, dass** die erste laterale Kante der ersten Folie (101) und die erste laterale Kante der zweiten Folie (102) miteinander verbunden sind, während die Mittelteile und die zweite laterale Kante der ersten Folie (101) und die Mittelteile und die zweite laterale Kante der zweiten Folie (102) nicht miteinander verbunden sind.

2. Vorrichtung nach Anspruch 1, wobei das Schaumstoffmaterial ein Polyurethanschaum, ein Polyethylenschaum, ein Polychloroprenschaum, ein Nitril-Butadien-Kautschukschaum oder ein Ethylen-Propylen-Dien-Monomerschaum ist.

3. Vorrichtung nach Anspruch 1 oder 2, wobei die zweite Folie (102) eine Barriereschicht zur akustischen Isolation ausbildet.

4. Vorrichtung nach einem der vorhergehenden Ansprüche, wobei das feste Material mindestens eines umfasst aus Polyvinylchlorid-Kautschuk, Ethylen-Propylen-Dien-Monomerkautschuk und Ethylen-Vinylacetat-Kautschuk, wobei das feste Material vorzugsweise eine Mischung aus Ethylen-Propylen-Dien-Monomer und EthylenVinylacetat-Kautschuk ist.

5. Vorrichtung nach einem der vorhergehenden Ansprüche, wobei der Klebstoff ein doppelseitiger Klebestreifen ist.

6. Vorrichtung nach einem der vorhergehenden Ansprüche, wobei die Dicke der ersten Folie (101) zwischen 5 und 25 mm beträgt, vorzugsweise zwischen 7 und 15 mm.

7. Vorrichtung nach einem der vorhergehenden Ansprüche, wobei die Dicke der zweiten Folie (102) zwischen 1 und 5 mm beträgt, vorzugsweise zwischen 1,5 und 3 mm.

8. Vorrichtung nach einem der vorhergehenden Ansprüche, wobei die erste laterale Kante der ersten Folie (101) und die erste laterale Kante der zweiten Folie (102) mittels eines Klebstoffs miteinander verbunden sind, der einen streifenförmigen Abschnitt benachbart zur ersten lateralen Kante der zweiten Folie (102), der sich auf einer der ersten Folie (101) zugewandten Seite der zweiten Folie (102) erstreckt, und einen streifenförmigen Abschnitt benachbart zur ersten lateralen Kante der ersten Folie (101), der sich auf einer der zweiten Folie (102) zugewandten Seite der ersten Folie (101) erstreckt, verbindet.

9. Verfahren zum Montieren der Vorrichtung nach einem der vorhergehenden Ansprüche, wobei die Vorrichtung an dem Rohr (105) montiert wird, indem die Vorrichtung um das zweite Rohr (105) herum gewickelt wird und der streifenförmige Abschnitt der zweiten lateralen Kante der zweiten Folie (102) auf den streifenförmigen Abschnitt der ersten lateralen Kante geschoben wird, wodurch die zweite laterale Kante der zweiten Folie (102) mit der ersten lateralen Kante der zweiten Folie (102) mittels dieses Klebstoffs verbunden wird, sodass die erste laterale Kante der ersten Folie (101) und die zweite laterale Kante der ersten Folie (101) dicht aneinander und am Außenumfang des zweiten Rohres (105) anliegen.

10. Verfahren zum Entfernen und erneuten Montieren der Vorrichtung nach einem der Ansprüche 1 bis 8, wobei die Vorrichtung an einem ersten Rohr (105) montiert ist; wobei die erste Breite der ersten Folie (101) im Wesentlichen gleich dem Außenrohrumfang (105) des ersten röhrenförmigen Rohrs (105) ist;
sodass sich die erste laterale Kante der ersten Folie (101) und die zweite laterale Kante der ersten Folie (101) dicht aneinander und gegen den Außenumfang des ersten Rohrs (105) erstrecken;
wobei das Verfahren das Entfernen der Vorrichtung von dem ersten Rohr (105) durch Ziehen des streifenförmigen Abschnitts der zweiten lateralen Kante der zweiten Folie (102) von dem streifenförmigen Abschnitt der ersten lateralen Kante umfasst, wobei der Klebstoff auf dem streifenförmigen Abschnitt angrenzend an die zweite laterale Kante der zweiten Folie (102) verbleibt, die sich auf der der ersten Folie (101) zugewandten Seite der zweiten Folie (102) und/oder dem der ersten lateralen Kante der zweiten Folie (102) benachbarten streifenförmigen Abschnitt erstreckt, der sich auf der der ersten Folie (101) abgewandten Seite der zweiten Folie (102) erstreckt; und
Montieren der Vorrichtung an einem zweiten röhrenförmigen Rohr (105), das im Wesentlichen den gleichen Durchmesser aufweist wie das erste Rohr (105), indem die Vorrichtung um das zweite Rohr (105) herum gewickelt wird und der streifenförmige Abschnitt der zweiten lateralen Kante der zweiten Folie (102) auf den streifenförmigen Abschnitt der ersten lateralen Kante geschoben wird, wodurch die zweite laterale Kante der zweiten Folie (102) mit der ersten lateralen Kante der zweiten Folie (102) mittels des Klebstoffs verbunden wird;
sodass sich die erste laterale Kante der ersten Folie (101) und die zweite laterale Kante der ersten Folie (101) dicht aneinander und gegen den Außenumfang des zweiten Rohrs (105) erstrecken.

## Revendications

1. Dispositif d'isolation acoustique et/ou thermique d'un tuyau tubulaire (105) ayant une circonférence extérieure du tuyau (105), ledit dispositif comprenant :
- une première feuille rectangulaire (101) faite d'un matériau en mousse souple ayant une première densité, ladite première feuille rectangulaire (101) ayant une première longueur dans une direction longitudinale et une première largeur dans une direction latérale, la première largeur étant sensiblement égale à la circonférence extérieure du tuyau (105) d'un tuyau tubulaire (105) sur lequel le dispositif est conçu pour être monté, et ladite première feuille (101) ayant un premier bord latéral et un second bord latéral opposé ;
- une seconde feuille rectangulaire (102) faite d'un matériau solide flexible ayant une seconde densité, la seconde densité étant supérieure à la première densité, ladite seconde feuille rectangulaire (102) ayant une seconde longueur dans ladite direction longitudinale et une seconde largeur dans ladite direction latérale, la seconde longueur étant sensiblement égale à la première longueur, et ladite seconde feuille (102) ayant un premier bord latéral et un second bord latéral opposé ; et
- la première feuille (101) et la seconde feuille (102) étant reliées l'une à l'autre ;
- la seconde largeur étant plus grande que la première largeur ; et
- une section en forme de bande adjacente au second bord latéral de la seconde feuille (102), s'étendant sur un côté de ladite seconde feuille (102) qui est tourné vers la première feuille (101) et/ou une section en forme de bande adjacente au premier bord latéral de la seconde feuille (102), s'étendant sur un côté de ladite seconde feuille (102) qui est tourné à l'opposé de la première feuille (101), étant munie d'un adhésif, pour relier le second bord latéral de la seconde feuille (102) au premier bord latéral de la seconde feuille (102) lorsque le dispositif est monté sur le tuyau (105),
**caractérisé en ce que** le premier bord latéral de la première feuille (101) et le premier bord latéral de la seconde feuille (102) sont reliés l'un à l'autre, tandis que les parties centrales et le second bord latéral de la première feuille (101) et les parties centrales et le second bord latéral de la seconde feuille (102) ne sont pas reliés l'un à l'autre.

2. Dispositif selon la revendication 1, le matériau en mousse étant une mousse de polyuréthane, une mousse de polyéthylène, une mousse de polychloroprène, une mousse de caoutchouc nitrile butadiène ou une mousse de monomère éthylène propylène diène.

3. Dispositif selon la revendication 1 ou 2, la seconde feuille (102) formant une couche barrière pour l'isolation acoustique.

4. Dispositif selon l'une quelconque des revendications précédentes, le matériau solide comprenant au moins un caoutchouc de chlorure de polyvinyle, un caoutchouc de monomère éthylène propylène diène et un caoutchouc éthylène acétate de vinyle, de préférence le matériau solide étant un mélange de monomère éthylène propylène diène et de caoutchouc éthylène acétate de vinyle.

5. Dispositif selon l'une quelconque des revendications précédentes, l'adhésif étant une bande adhésive double face.

6. Dispositif selon l'une quelconque des revendications précédentes, l'épaisseur de la première feuille (101) étant comprise entre 5 et 25 mm, de préférence entre 7 et 15 mm.

7. Dispositif selon l'une quelconque des revendications précédentes, l'épaisseur de la seconde feuille (102) étant comprise entre 1 et 5 mm, de préférence entre 1,5 et 3 mm.

8. Dispositif selon l'une quelconque des revendications précédentes, le premier bord latéral de la première feuille (101) et le premier bord latéral de la seconde feuille (102) étant reliés l'un à l'autre au moyen de colle, qui relie une section en forme de bande adjacente au premier bord latéral de la seconde feuille (102), s'étendant sur un côté de ladite seconde feuille (102) qui est tourné vers la première feuille (101), et une section en forme de bande adjacente au premier bord latéral de la première feuille (101), s'étendant sur un côté de ladite première feuille (101) qui est tourné vers la seconde feuille (102).

9. Procédé de montage du dispositif selon l'une quelconque des revendications précédentes, le dispositif étant monté sur le tuyau (105) en enroulant le dispositif autour du second tuyau (105) et en poussant la section en forme de bande au second bord latéral de la seconde feuille (102) sur la section en forme de bande au premier bord latéral, reliant ainsi le second bord latéral de la seconde feuille (102) au premier bord latéral de la seconde feuille (102) au moyen dudit adhésif, de telle sorte que le premier bord latéral de la première feuille (101) et le second bord latéral de la première feuille (101) s'étendent étroitement l'un contre l'autre et contre la circonférence extérieure du second tuyau (105).

10. Procédé de démontage et de remontage du dispositif selon l'une quelconque des revendications 1 à 8, ledit dispositif étant monté sur un premier tuyau (105) ;
la première largeur de la première feuille (101) étant sensiblement égale à la circonférence extérieure du tuyau (105) du premier tuyau tubulaire (105) ;
de telle sorte que le premier bord latéral de la première feuille (101) et le second bord latéral de la première feuille (101) s'étendent étroitement l'un contre l'autre et contre la circonférence extérieure du premier tuyau (105) ;
ledit procédé comprenant le démontage du dispositif du premier tuyau (105) en tirant la section en forme de bande au second bord latéral de la seconde feuille (102) de la section en forme de bande au premier bord latéral, de sorte que l'adhésif reste sur la section en forme de bande adjacente au second bord latéral de la seconde feuille (102), s'étendant sur le côté de ladite seconde feuille (102) qui est tourné vers la première feuille (101) et/ou la section en forme de bande adjacente au premier bord latéral de la seconde feuille (102), s'étendant sur le côté de ladite seconde feuille (102) qui est tourné à l'opposé de la première feuille (101) ; et
le montage du dispositif sur un second tuyau tubulaire (105), ayant sensiblement le même diamètre que le premier tuyau (105), en enroulant le dispositif autour du second tuyau (105) et en poussant la section en forme de bande au second bord latéral de la seconde feuille (102) sur la section en forme de bande au premier bord latéral, reliant ainsi le second bord latéral de la seconde feuille (102) au premier bord latéral de la seconde feuille (102) au moyen dudit adhésif ;
de telle sorte que le premier bord latéral de la première feuille (101) et le second bord latéral de la première feuille (101) s'étendent étroitement l'un contre l'autre et contre la circonférence extérieure du second tuyau (105).
